# FASCICULE DE BREVET EUROPEEN

(11) **EP 3 259 132 B1**
(45) Date de publication et mention de la délivrance du brevet: **06.01.2021**
(21) Numéro de dépôt: 17712188.6
(22) Date de dépôt: 12.01.2017
(51) Int. Cl.: B32B 27/08, B32B 27/22, B32B 27/30, B32B 27/32, B32B 27/34, B32B 1/08, B32B 7/02, F16L 11/04, B32B 27/18

(54) **STRUCTURE TUBULAIRE MULTICOUCHE POSSÉDANT UNE MEILLEURE RÉSISTANCE A L'EXTRACTION DANS LA BIO-ESSENCE ET SON UTILISATION**
MEHRSCHICHTIGE RÖHRENFÖRMIGE STRUKTUR MIT VERBESSERTER EXTRAKTIONSBESTÄNDIGKEIT IN BIOBENZIN UND VERWENDUNG DAVON
MULTILAYER TUBULAR STRUCTURE HAVING IMPROVED RESISTANCE TO EXTRACTION IN BIOGASOLINE AND USE THEREOF

(30) Priorité: 15.01.2016 FR 1650339
(43) Date de publication de la demande: 27.12.2017
(73) Titulaire: Arkema France, 92700 Colombes (FR)
(72) Inventeur: MONTANARI, Thibaut, 27300 Menneval (FR); RECOQUILLE, Christelle, 27550 Nassandres (FR); VERBAUWHEDE, Bertrand, 27800 Aclou (FR)
(86) Numéro de dépôt international: PCT/FR2017/050067
(87) Numéro de publication internationale: WO 2017/121962

(56) Documents cités:
- EP-A1- 1 270 209
- EP-A1- 1 283 101
- FR-A1- 2 925 865
- US-A- 5 474 822
- US-A- 5 512 342
- US-A- 5 554 426

## Description

L'invention porte sur l'utilisation d' une structure multicouche, en particulier sous forme de tube, destinée au transport des fluides, en particulier du carburant de type essence, notamment alcoolisée, en particulier pour les véhicules à moteur, pour satisfaire un test d'extractibles.

L'invention porte plus particulièrement sur les tubes présents au sein d'un moteur. Ces tubes sont destinés au transport de carburants, notamment entre le réservoir et le moteur.

Pour le transport de l'essence et en particulier de bio-essence, il faut satisfaire de nombreux critères, en particulier de bonnes propriétés en barrière (pour des raisons de protection de l'environnement), de choc à froid, de tenue pression, etc.

Pour des raisons de sécurité et de préservation de l'environnement, notamment avec l'arrivée de nouveaux bio-carburants, les constructeurs automobiles imposent aux tubes précédemment cités des caractéristiques mécaniques particulières, ainsi que des caractéristiques de très faible perméabilité et de bonne tenue aux différents constituants des carburants, ceux-ci variant selon le pays (hydrocarbures, additifs, alcools comme le méthanol et l'éthanol, les alcools pouvant être des composants majoritaires dans certains cas), aux huiles de lubrification du moteur et aux autres produits chimiques susceptibles d'être rencontrés dans cet environnement (acide de batteries, liquides de frein, liquides de refroidissement, sels métalliques tels que le chlorure de calcium ou de zinc).

Les caractéristiques des cahiers des charges couramment requises par les constructeurs automobiles pour qu'un tube soit jugé satisfaisant sont cumulativement les suivantes :
- bonne et pérenne adhésion entre les couches, si le tube est un tube multicouche, tout particulièrement après avoir été exposé au carburant ;
- bonne intégrité des liaisons (tubes avec raccords) après circulation du carburant, c'est-à-dire ne conduisant à aucune fuite ;
- bonne stabilité dimensionnelle du tube, lorsqu'il est utilisé avec de l'essence ;
- bonne tenue aux chocs à froid (de -30°C à -40°C environ), de manière à ce que le tube ne se brise pas ;
- bonne tenue à chaud (environ 150°C), de manière à ce que le tube ne se déforme pas ;
- bonne tenue au vieillissement en milieu oxydatif chaud (par exemple : air chaud du compartiment moteur, de 100 à 150°C environ) ;
- bonne tenue aux carburants et à leurs produits de dégradation et notamment avec de fortes teneurs en peroxyde ;
- très faible perméabilité aux carburants, et plus particulièrement de bonnes propriétés barrière aux bio-carburants, tant pour ses composants polaires (comme l'éthanol) que pour ses composants apolaires (hydrocarbures) ;
- bonne souplesse du tube pour faciliter le montage notamment de la tubulure d'alimentation en carburant ;
- bonne résistance au ZnCl2 (par exemple, en hiver, lorsque les routes sont salées, l'extérieur du tube étant exposé à cet environnement).

De plus, les tubes recherchés doivent éviter les inconvénients suivants :
- si le tube est un tube multicouche, le délaminage des couches, notamment internes, notamment lors de l'insertion de raccord (ce qui peut conduire à des fuites) ;
- un gonflement excessif du tube après vieillissement dans les systèmes essence/diesel (y compris pour les biodiesels ou bio essences), qui peut conduire à des fuites ou des problèmes de positionnement sous le véhicule.

Récemment un nouveau problème est apparu, à savoir l'excès de matière extractible du tube multicouche après contact prolongé avec l'essence alcoolisée. Ces matières extractibles sont susceptibles de bloquer ou boucher les injecteurs des moteurs de véhicules. Les constructeurs automobiles, en particulier Volkswagen ont donc mis en place de nouveaux critères de sélection des tubes susceptibles de transporter de l'essence, notamment alcoolisée, dans les véhicules automobiles qui sont plus sévères qu'auparavant. Ainsi, le nouveau test mis au point par les différents constructeurs notamment Volkswagen consiste à déterminer la proportion d'extractibles d'un tube de transport d'essence après mise en contact de l'intérieur de ce dernier avec de l'essence alcoolisée à chaud pendant plusieurs heures et pesée du résidu d'évaporation de l'essence contenue à l'intérieur du tube correspondant aux extractibles. Le tube testé ne pourra alors être utilisé pour le transport de l'essence que si la proportion d'extractibles le plus bas possible, en particulier inférieure ou égale à 6g/m2 (de surface interne de tube).

A l'heure actuelle, il existe deux types de tubes, des tubes monocouches et multicouches, c'est-à-dire constitués d'une ou plusieurs couches de polymère. Pour le transport d'essence en particulier, l'utilisation de tube multicouche comprenant une couche barrière tend à se généraliser pour des raisons écologiques.

De manière classique, les tubes utilisés sont fabriqués par mono-extrusion, s'il s'agit d'un tube monocouche, ou par co-extrusion des différentes couches, s'il s'agit d'un tube multicouche, selon les techniques habituelles de transformation des thermoplastiques.

Les structures (MLT) pour le transport d'essence sont typiquement constituées d'une couche barrière tel le PPA, surmonté d'une couche PA (au moins une couche) et éventuellement comprenant des couches de liants dans le cas où l'adhésion, entre les autres couches, se révèle insuffisante.

Ainsi le brevet EP 2098580 décrit notamment des tubes présentant une barrière en PPA et au moins une couche de polyamide, plastifiée ou non, située au-dessus de la couche barrière.

Néanmoins, ce type de structure ainsi que les autres MLT connues de l'homme de l'art n'est plus adapté au nouveau test d'extractibles préalablement cité.

La présente invention entend résoudre ce nouveau problème par un agencement et une constitution particulière des couches de la structure multicouche.

La présente invention concerne une structure tubulaire multicouche MLT destinée au transport de carburants, en particulier d'essence, comprenant de l'intérieur vers l'extérieur au moins une couche intérieure barrière en PPA
(1) et au moins une couche extérieure
(2) situé au-dessus de la couche barrière,
ladite couche extérieure (2) ou l'ensemble des couches (2) et des autres couches éventuelles situées au-dessus de la couche barrière, contenant en moyenne de 0 à 5% de plastifiant par rapport au poids total de la composition de la couche (2), ou dans laquelle l'ensemble des couches extérieures, situées au-dessus de la couche barrière, comprennent en moyenne de 0 à 5% de plastifiant,
ladite couche extérieure (2) comprenant majoritairement au moins un polyamide de type aliphatique ou constitué de plus de 75% de motifs aliphatiques, ledit polyamide aliphatique étant choisi parmi :
- un polyamide noté A présentant un nombre moyen d'atomes de carbone par atome d'azote noté C_{A} compris entre 4 et 8,5, avantageusement entre 4 et 7 ;
- un polyamide noté B et un nombre moyen d'atomes de carbone par atome d'azote noté C_{B} compris entre 7 et 10, avantageusement entre 7,5 et 9,5 ;
- un polyamide noté C présentant un nombre moyen d'atomes de carbone par atome d'azote noté C_{C} compris entre 9 et 18, avantageusement entre 10 et 18 ;
sous réserve que lorsque ladite couche extérieure (2) comprend au moins trois polyamides, l'un au moins desdits polyamides A, B ou C est exclu, ladite structure tubulaire étant utilisée pour satisfaire un test d'extractibles, ledit test consistant à remplir ladite structure tubulaire multicouche MLT d'essence alcoolisée type FAM-B et à chauffer l'ensemble à 60°C pendant 96 heures, puis à le vider en le filtrant dans un bêcher, puis à laisser le filtrat du bêcher s'évaporer à température ambiante pour enfin peser ce résidu dont la proportion doit être inférieure ou égale à environ 6g/m2 de surface interne de tube.

On ne sortirait pas du cadre de l'invention si l'objet destiné au transport de carburant servait également pour le stockage de carburant.

Les carburants concernés sont notament les carburants légers susceptibles de polluer, avantageusement les carburants sauf le diesel, notamment de l'essence ou du GPL, en particulier de l'essence et plus particulièrement de l'essence alcoolisée.

Le terme « essence » désigne un mélange d'hydrocarbures issus de la distillation du pétrole auxquels peuvent être ajoutés des additifs ou des alcools comme le méthanol et l'éthanol, les alcools pouvant être des composants majoritaires dans certains cas.

L'expression « essence alcoolisée » désigne une essence dans laquelle du méthanol ou de l'éthanol ont été ajoutés. Elle désigne également une essence de type E95 qui ne contient pas de produit de distillation du pétrole.

L'expression « couche barrière » désigne une couche ayant des caractéristiques de faible perméabilité et de bonne tenue aux différents constituants des fluides, notamment des carburants c'est-à-dire que la couche barrière ralentit le passage du fluide, notamment du carburant, tant pour ses composants polaires (comme l'éthanol) que pour ses composants apolaires (hydrocarbures) dans les autres couches de la structure ou même à l'extérieure de la structure. La couche barrière est donc une couche permettant avant tout de ne pas trop perdre d'essence dans l'atmosphère par diffusion, permettant ainsi d'éviter la pollution atmosphérique.
Les mesures de perméabilité aux essences sont déterminées à 60°C selon une méthode gravimétrique avec le CE10 : isooctane/toluène/éthanol = 45/45/10 vol.%. La perméabilité instantanée est nulle pendant la période d'induction, puis elle augmente progressivement jusqu'à une valeur à l'équilibre qui correspond à la valeur de perméabilité en régime permanent. Cette valeur obtenue en régime permanent est considérée comme étant la perméabilité du matériau.

Ces matériaux barrières sont des polyphtalamides (PPA). Si ces polymères ne sont pas fonctionnalisés, alors on peut ajouter une couche intermédiaire de liant pour assurer une bonne adhésion au sein de la structure MLT.

Parmi les PPA les coPA6T, le PA9T et ses copolymères, le PA10T et ses copolymères, les MXD6 et ses copolymères sont particulièrement intéressants.

L'expression « ladite couche extérieure (2) comprenant majoritairement au moins un polyamide de type aliphatique» signifie que ledit polyamide de type aliphatique est présent en proportion de plus de 50% en poids dans la couche (2). Le polyamide de type aliphatique est linéaire et n'est pas de type cycloaliphatique.

Avantageusement, ledit polyamide de type aliphatique majoritaire de la ou les couches (2) comprend également majoritairement des motifs aliphatiques, à savoir plus de 50% de motifs aliphatiques.

Avantageusement, ledit polyamide de type aliphatique majoritaire de la ou les couches (2) est constitué de plus de 75% de motifs aliphatiques, de préférence ledit polyamide de type aliphatique majoritaire de la ou les couches (2) est totalement aliphatique.

Les inventeurs ont donc trouvé que l'absence ou du moins une faible proportion de plastifiant dans la ou les couches extérieures, c'est-à-dire située(s) au-dessus de la couche barrière permettait de diminuer fortement la proportion d'extractibles tel que déterminée par un test tel que défini ci-dessus et en particulier par un test qui consiste à remplir une structure tubulaire d'essence alcoolisée type FAM-B et à chauffer l'ensemble à 60°C pendant 96 heures, puis à le vider en le filtrant dans un bêcher, puis à laisser le filtrat du bécher s'évaporer à température ambiante pour enfin peser ce résidu dont la proportion doit être inférieure ou égale à environ 6g/m2 de surface interne de tube.

L'essence alcoolisée FAM B est décrite dans la norme DIN 51604-1 :1982, DIN 51604-2 :1984 et DIN 51604-3 :1984.

Succinctement, de l'essence alcoolisée FAM A est tout d'abord préparée avec un mélange de 50% de Toluène, 30% d'isooctane, 15% de di-isobutylène et 5% d'éthanol puis FAM B est préparé par mélange de 84.5% FAM A avec 15% de méthanol et 0,5% eau.

Au total, FAB est constitué de 42,3% de toluène, 25,4% d'isooctane, 12,7% de di-isobutylène, 4,2% d'éthanol, 15% de méthanol et 0,5% d'eau.

Selon la présente demande, le terme "polyamide", également noté PA, vise :
- les homopolymères,
- les copolymères, ou copolyamides, à base de différents motifs amide, tel par exemple le copolyamide 6/12 avec des motifs amide dérivés du lactame-6 et du lactame-12,
- les alliages de polyamides, dès lors que le polyamide est le constituant majoritaire.

Il existe aussi une catégorie de copolyamides au sens large, qui bien que non préférée, fait partie du cadre de l'invention. Il s'agit des copolyamides comprenant non seulement des motifs amides (qui seront majoritaires, d'où le fait qu'ils soient à considérer comme des copolyamides au sens large), mais aussi des motifs de nature non amide, par exemple des motifs éthers. Les exemples les plus connus sont les PEBA ou polyéther-bloc-amide, et leurs variantes copolyamide-ester-éther, copolyamide-éther, copolyamide ester. Parmi ceux-ci, citons le PEBA-12 où les motifs polyamide sont les mêmes que ceux du PA12, le PEBA-6.12 où les motifs polyamide sont les mêmes que ceux du PA6.12.

On distingue également les homopolyamides, copolyamides et alliages par leur nombre d'atomes de carbone par atome d'azote, sachant qu'il y a autant d'atomes d'azote que de groupes amides (-CO-NH-).

Un polyamide fortement carboné est un polyamide à fort taux d'atomes de carbone (C) par rapport à l'atome d'azote (N). Ce sont les polyamides avec environ au moins 9 atomes de carbone par atome d'azote, tel par exemple le polyamide-9, le polyamide-12, le polyamide-11, le polyamide-10.10 (PA10.10), le copolyamide 12/10.T, le copolyamide 11/10.T, le polyamide-12.T, le polyamide-6.12 (PA6.12). T représente l'acide téréphtalique.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Un polyamide faiblement carboné est un polyamide à faible taux d'atomes de carbone (C) par rapport à l'atome d'azote (N). Ce sont les polyamides avec environ moins de 9 atomes de carbone par atome d'azote, tel par exemple le polyamide-6, le polyamide-6.6, le polyamide-4.6, le copolyamide-6.T/6.6, le copolyamide 6.I/6.6, le copolyamide 6.T/6.I/6.6, le polyamide 9.T. I représente le diacide isophtalique.

Dans le cas d'un homopolyamide de type PA-X.Y, avec X désignant un motif obtenu à partir d'une diamine et Y désignant un motif obtenu à partir d'un diacide, le nombre d'atomes de carbone par atome d'azote est la moyenne des nombres d'atomes de carbone présents dans le motif issu de la diamine X et dans le motif issu du diacide Y. Ainsi le PA6.12 est un PA à 9 atomes de carbone par atome d'azote, autrement dit un PA en C9. Le PA6.13 est en C9.5.

Dans le cas des copolyamides, le nombre d'atomes de carbone par atome d'azote se calcule selon le même principe. Le calcul est réalisé au prorata molaire des différents motifs amides. Dans le cas d'un copolyamide ayant des motifs de type non amide, le calcul s'effectue uniquement sur la part de motifs amides. Ainsi, par exemple, le PEBA-12, qui est un copolymère bloc de motifs amide 12 et de motifs éther, le nombre moyen d'atome de carbone par atome d'azote sera 12, comme pour le PA12 ; pour le PEBA-6.12, il sera de 9, comme pour le PA6.12.

Ainsi, des polyamides fortement carbonés comme le polyamide PA12 ou 11 adhèrent difficilement sur un (co)PAXT faiblement carboné comme le coPA6T/x, sur un polyamide faiblement carboné comme le polyamide PA6, ou encore sur un alliage de polyamide PA6 et de polyoléfine (comme, par exemple, un Orgalloy® commercialisé par la société Arkema).

Toutefois, on observe que les structures de tubes actuellement proposées ne sont pas satisfaisantes pour une utilisation dédiée aux bio-carburants, les exigences des cahiers des charges des constructeurs automobiles rappelées ci-avant ne pouvant être toutes simultanément remplies.

Les bio-carburants ne sont pas uniquement issus du pétrole mais comprennent une proportion de produits polaires tels les alcools d'origine végétale, comme l'éthanol ou le méthanol, d'au moins 3%. Ce taux peut monter jusqu'à 85%, voire 95%.

En outre, la température de circulation du carburant tend à s'élever du fait des nouveaux moteurs (plus confinés, opérant à plus haute température).

Avantageusement, la présente invention concerne une structure tubulaire multicouche (MLT) telle que définie ci-dessus, dans laquelle ladite couche extérieure (2) comprend de 0 à 1,5% de plastifiant par rapport au poids total de la composition de la couche (2).

Dans le cas où plusieurs couches (2) sont présentes, il est possible qu'une des couches extérieures présente une proportion de plastifiant importante telle que 15% en poids mais dans ce cas, la proportion de plastifiant est compensée par l'épaisseur de la couche qui est alors beaucoup plus fine de manière à ce que la valeur moyenne de plastifiant présente dans l'ensemble des couches intérieures ne dépasse pas 5%. La proportion de plastifiant dans cette couche peut alors être jusqu'à 15% mais son épaisseur ne dépasse pas 20% de l'épaisseur totale du tube, de préférence elle ne dépasse pas 200µm.

Avantageusement, la présente invention concerne une structure tubulaire multicouche (MLT) comprenant une couche (2) telle que définie ci-dessus, dans laquelle au moins une deuxième couche extérieure (2') située au-dessus de la couche barrière est présente, et de préférence située au-dessus de la couche (2), ladite couche (2') étant plastifiée, ledit plastifiant étant en particulier présent en une proportion de 1,5% à 15% en poids par rapport au poids total de la composition de ladite couche, l'épaisseur de ladite couche (2') représente de préférence jusqu'à 20% de l'épaisseur totale de la structure tubulaire, en particulier jusqu'à 200µm.

La couche (2') comprend tout comme la couche (2) majoritairement un polyamide type aliphatique c'est-à-dire que ledit polyamide de type aliphatique est présent en proportion de plus de 50% en poids dans la couche (2'). Le polyamide de type aliphatique est linéaire et n'est pas de type cycloaliphatique.

Avantageusement, ledit polyamide de type aliphatique majoritaire de la ou les couches (2') comprend également majoritairement des motifs aliphatiques, à savoir plus de 50% de motifs aliphatiques.

Avantageusement, ledit polyamide de type aliphatique majoritaire de la ou les couches (2') est constitué de plus de 75% de motifs aliphatiques, de préférence ledit polyamide de type aliphatique majoritaire de la ou les couches (2') est totalement aliphatique.

Dans un autre mode de réalisation, la présente invention concerne une structure tubulaire multicouche (MLT), dans laquelle la (ou les) couche(s) (2) comprend(comprennent) jusqu'à 1,5% en poids de plastifiant, par rapport au poids total de la composition de ladite couche ou de l'ensemble des compositions des couches (2).

Avantageusement, la structure tubulaire multicouche (MLT) comprend une seule couche (2) et est dépourvue de plastifiant.

Dans un autre mode de réalisation, la présente invention concerne une structure tubulaire multicouche (MLT), dans laquelle le taux de plastifiant de toutes les couches situées au-dessus de la couche barrière est au maximum de 5% en poids par rapport au poids total des compositions de toutes les couches situées au-dessus de la couche barrière.

Dans un autre mode de réalisation, la présente invention concerne une structure tubulaire multicouche (MLT), dans laquelle la couche (2') est la plus extérieure et est la seule plastifiée, la (ou les) couche(s) (2) étant dépourvue(s) de plastifiant.

La proportion de plastifiant peut représenter jusqu'à 15% en poids du poids total de la composition de la couche (2'). Plus la proportion de plastifiant est importante et plus la couche (2') sera fine avec une épaisseur de ladite couche (2') qui représente de préférence jusqu'à 20% de l'épaisseur totale de la structure tubulaire, en particulier jusqu'à 200µm.

Avantageusement, la structure tubulaire multicouche (MLT) est constituée de trois couches, de l'extérieur vers l'intérieur (2')//(2)//(1), la couche (2') étant la seule plastifiée dans des proportions telles que définies ci-dessus, la couche (2) étant dépourvues de plastifiant.

Une structure tubulaire multicouche (MLT) constituée de trois couches de l'extérieur vers l'intérieur (2')//(2)//(1) présente l'avantage d'avoir un allongement à la rupture à t = 0 lorsque la structure est très sèche avec un taux d'humidité très bas compris de 0 et 30% d'humidité relative, qui est très bon et notamment meilleur qu'une structure dont les couches (2') et (2) sont dépourvues de plastifiant.

Avantageusement, dans ce dernier mode de réalisation, la couche (2') est la plus extérieure et le polyamide de cette dernière est un polyamide à longue chaîne, soit un nombre moyen d'atomes de carbone par atome d'azote noté Cc compris de 9,5 à 18, la couche (2) est située entre la couche barrière et la couche (2') et le polyamide de cette couche (2) est un polyamide à chaîne courte, soit un nombre moyen d'atomes de carbone par atome d'azote noté Ca compris de 4 à 9.

Avantageusement, dans ce dernier mode de réalisation, la couche (2') à une épaisseur comprise de 100 à 200µm, la couche (2) présente une épaisseur d'au moins 200µm, la couche (1) présente une épaisseur comprise de 100 à 300µm.

Avantageusement, dans ce dernier mode de réalisation, la couche (2') est la plus extérieure et le polyamide de cette dernière est un polyamide à longue chaîne, soit un nombre moyen d'atomes de carbone par atome d'azote noté Cc compris de 9,5 à 18, la couche (2) est située entre la couche barrière et la couche (2') et le polyamide de cette couche (2) est un polyamide à chaîne courte, soit un nombre moyen d'atomes de carbone par atome d'azote noté compris de 4 à 9, la couche (2') à une épaisseur comprise de 100 à 200µm, la couche (2) présente une épaisseur d'au moins 200 à 400 µm, la couche (1) présente une épaisseur comprise de 100 à 300µm.

Quel que soit le nombre de couches, les structures tubulaires préférées sont celles contenant le moins possibles de plastifiant dans les couches externes, c'est-à-dire les moins proches du fluide. Ces structures peuvent être les suivantes :
- Structure tubulaire multicouche (MLT) ne contenant pas plus de 1,5% de plastifiant, dans les premiers 50% de son épaisseur à partir de la couche barrière en contact avec le fluide.
- Structure tubulaire multicouche (MLT) ne contenant pas plus de 1,5% de plastifiant, dans les premiers 75% de son épaisseur à partir de la couche barrière en contact avec le fluide.
- Structure tubulaire multicouche (MLT) ne contenant pas plus de 1,5% de plastifiant, dans les premiers 85% de son épaisseur à partir de la couche barrière en contact avec le fluide.
- Structure tubulaire multicouche (MLT) dépourvue de plastifiant, dans les premiers 50% de son épaisseur à partir de la couche barrière en contact avec le fluide.
- Structure tubulaire multicouche (MLT) dépourvue de plastifiant, dans les premiers 75% de son épaisseur à partir de la couche barrière en contact avec le fluide.
- Structure tubulaire multicouche (MLT) dépourvue de plastifiant, dans les premiers 85% de son épaisseur à partir de la couche barrière en contact avec le fluide.

Dans un autre mode de réalisation, la présente invention concerne une structure tubulaire multicouche (MLT) telle que définie ci-dessus, dans laquelle au moins une couche (3) est présente, ladite couche (3) ne contenant pas plus de 15% en poids de plastifiant, de préférence pas plus de 1,5% en poids de plastifiant, par rapport au poids total des constituants de la couche (3), avantageusement la couche (3) est dépourvue de plastifiant, ladite couche (3) comprenant majoritairement au moins un polyamide de type aliphatique ou constitué de plus de 75% de motifs aliphatiques, ledit polyamide aliphatique étant choisi parmi :
- un polyamide noté A présentant un nombre moyen d'atomes de carbone par atome d'azote noté CA compris de 4 à 8,5, avantageusement de 4 à 7 ;
- un polyamide noté B et un nombre moyen d'atomes de carbone par atome d'azote noté CB compris de 7 à 10, avantageusement de 7,5 à 9,5 ;
- un polyamide noté C présentant un nombre moyen d'atomes de carbone par atome d'azote noté CC compris de 9 à 18, avantageusement de 10 à18 ;
sous réserve que lorsque ladite couche (3) comprend au moins trois polyamides, l'un au moins desdits polyamides A, B ou C est exclu,
ladite couche (3) étant située entre la couche extérieure (2) et la couche barrière (1) ;
ou ladite couche (3) est une couche de liant dont l'épaisseur représente jusqu'à 15% de la structure (MLT).

La couche (3) lorsqu'elle n'est pas une couche de liant est un polyamide de type aliphatique tel que défini pour les couches (2) et (2').

Avantageusement, la structure tubulaire de l'invention est une structure à trois couches constituée de l'extérieur vers l'intérieur des couches suivantes : (2)//(3)//(1), la couche (2) étant plastifiée jusqu'à 5% comme ci-dessus et fine et la couche (3) lorsqu'elle est différente de la couche de liant telle que définie ci-dessus est dépourvue de plastifiant.

Néanmoins, cette couche (2) plastifiée jusqu'à 5% en poids ne doit pas être trop fine sinon la couche barrière est trop peu au centre et la structure MLT risque de ne pas être assez bon en choc. Par contre elle peut être très fine s'il y a une couche supplémentaire épaisse (non plastifiée) entre la couche (2) et la couche (1), de façon à ce que la couche (1) soit pas trop décentrée.

Une autre couche (2') peut également être présente dans cette structure à trois couches.

La ladite couche (3) peut également être un liant tel que décrit, en particulier dans les brevets EP 1452307 et EP1162061, EP 1216826 et EP0428833.

Il est implicite que les couches (2) et (1) adhèrent entre elles. La couche de liant est destinée à être intercalée entre deux couches qui n'adhèrent pas ou difficilement entre elles.

Le liant peut être par exemple, mais sans être limité à ceux-ci, une composition à base de 50% de copolyamide 6/12 (de ratio 70/30 en masse) de Mn 16000, et de 50% copolyamide 6/12 (de ratio 30/70 en masse) de Mn 16000, une composition à base de PP (polypropylène) greffé avec de l'anhydride maléique, connu sous le nom d'Admer QF551A de la société Mitsui, une composition à base de PA610 (de Mn 30000, et tel que défini par ailleurs) et de 36% de PA6 (de Mn 28000) et de 1,2% de stabilisants organiques (constitué de 0,8% de phénol Lowinox 44B25 de la société Great Lakes, de 0,2% de phosphite Irgafos 168 de la société Ciba, de 0,2% d'anti-UV Tinuvin 312 de la société Ciba), une composition à base de PA612 (de Mn 29000, et tel que défini par ailleurs) et de 36% de PA6 (de Mn 28000, et tel que défini par ailleurs) et de 1,2% de stabilisants organiques (constitué de 0,8% de phénol Lowinox 44B25 de la société Great Lakes, de 0,2% de phosphite Irgafos 168 de la société Ciba, de 0,2% d'anti-UV Tinuvin 312 de la société Ciba), une composition à base de PA610 (de Mn 30000, et tel que défini par ailleurs) et de 36% de PA12 (de Mn 35000, et tel que défini par ailleurs) et de 1,2% de stabilisants organiques (constitué de 0,8% de phénol Lowinox 44B25 de la société Great Lakes, de 0,2% de phosphite Irgafos 168 de la société Ciba, de 0,2% d'anti-UV Tinuvin 312 de la société Ciba), une composition à base de 40% PA6 (de Mn 28000, et tel que défini par ailleurs), de 40% de PA12 (de Mn 35000, et tel que défini par ailleurs) et de 20% d'EPR fonctionnalisé Exxelor VA1801 (société Exxon) et de 1,2% de stabilisants organiques (constitué de 0,8% de phénol Lowinox 44B25 de la société Great Lakes, de 0,2% de phosphite Irgafos 168 de la société Ciba, de 0,2% d'anti-UV Tinuvin 312 de la société Ciba) ou encore une composition à base de 40% PA610 (de Mn 30000, et tel que défini par ailleurs), de 40% de PA6 (de Mn 28000, et tel que défini par ailleurs) et de 20% de modifiant choc type éthylène/acrylate d'éthyle/anhydride en rapport massique 68,5/30/1,5 (MFI 6 à 190°C sous 2.16 kg), et de 1,2% de stabilisants organiques (constitué de 0.8% de phénol Lowinox 44B25 de la société Great Lakes, de 0,2% de phosphite Irgafos 168 de la société Ciba, de 0,2% d'anti-UV Tinuvin 312 de la société Ciba).

La présente invention concerne une structure tubulaire multicouche (MLT) dans laquelle la couche barrière (1) est une couche en polyphtalamide (PPA).

Le terme PPA signifie une composition à base majoritairement d'un polyamide comprenant une majorité de motifs qui comportent au moins un monomère aromatique, en particulier polyphtalamide de type de type copolyamide 6.T/x (ou x désigne un ou plusieurs comonomoères) tels les Zytel HTN de la société Dupont, tels les Grivory HT de la société Ems, tels les Amodel de la société Solvay, tels les Genestar de la société Kuraray, tel les compositions PPA à base de coPA6T/6I, coPA6T/66, coPA6T/6, de coPA6T/6I/66, de PPA9T, de coPPA9T/x, de PPA10T, de coPPA10T/x.

Avantageusement, dans la structure tubulaire multicouche (MLT) telle que définie ci-dessus, le polyamide de la couche extérieure (2) est un polyamide choisi parmi B ou C tels que définis ci-dessus, en particulier PA 11, PA12, PA610, PA612, PA1012, les copolyamides correspondants et les mélanges desdits polyamides ou copolyamides, les polyamides obtenus à partir d'un lactame étant avantageusement lavés.

Dans un autre mode de réalisation, la présente invention concerne une structure tubulaire multicouche (MLT) telle que définie ci-dessous, dans laquelle dans laquelle le PPA est conducteur.

Avantageusement, dans la structure tubulaire multicouche (MLT) telle que définie ci-dessus, le polyamide de la couche (3) est un mélange d'un polyamide présentant un nombre moyen d'atomes de carbone par atome d'azote de 10 ou plus et un polyamide présentant un nombre moyen d'atomes de carbone par atome d'azote de 6 ou moins, par exemple PA12 et PA6 et une (co)polyoléfine fonctionnalisée anhydride.

Avantageusement, dans la structure tubulaire multicouche (MLT) telle que définie ci-dessus, le polyamide de la couche (3) est choisi parmi les mélanges binaires : PA6 et PA12, PA6 et PA612, PA6 et PA610, PA12 et PA612, PA12 et PA610, PA1010 et PA612, PA1010 et PA610, PA1012 et PA612, PA1012 et PA610, et les mélanges ternaires : PA6, PA610 et PA12 ; PA6, PA612 et PA12 ; PA6, PA614 et PA12.

Dans un autre mode de réalisation, la présente invention concerne une structure tubulaire multicouche (MLT) telle que définie ci-dessus, dans laquelle au moins une des couches (2), (2') et (3) comprend au moins un modifiant choc et/ou au moins un additif.

Il est bien évident que le modifiant choc ou l'additif n'est pas un plastifiant.

Avantageusement, les couches (2) et (2') comprennent au moins un modifiant choc et/ou au moins un additif.

Avantageusement, les couches (2) et (3) comprennent au moins un modifiant choc et/ou au moins un additif.

Avantageusement, les couches (2), (2') et (3) comprennent au moins un modifiant choc et/ou au moins un additif.

Dans un autre mode de réalisation, la présente invention concerne une structure tubulaire multicouche (MLT) telle que définie ci-dessus, dans laquelle la structure comprend deux couches dans l'ordre suivant (2)//(1), la couche (2) ne contenant pas plus de 1,5% en poids de plastifiant, par rapport au poids total de la composition de chaque couche, en particulier la couche (2) est dépourvue de plastifiant.

Dans un autre mode de réalisation, la présente invention concerne une structure tubulaire multicouche (MLT) telle que définie ci-dessus, dans laquelle la structure comprend trois couches dans l'ordre suivant (2')//(2)//(1), la couche (2') étant telle que définie ci-dessus, la couche (2) ne contenant pas plus de 1,5% en poids de plastifiant, par rapport au poids total de la composition de chaque couche, en particulier la couche (2) est dépourvue de plastifiant.

Selon un autre mode de réalisation, la présente invention concerne une structure tubulaire multicouche (MLT) telle que définie ci-dessus, dans laquelle la structure comprend les couches dans l'ordre suivant :
(2')//(2)//(3)//(1) dans laquelle les couches (2) et (2') sont telles que définies ci-dessus, la couche (3) ne contenant pas plus de 1,5% en poids de plastifiant, par rapport au poids total de la composition de chaque couche, la couche (3) comprenant du plastifiant ou la couche (3) est dépourvue de plastifiant.

En particulier ladite couche (2') de la structure à quatre couches ci-dessus est plastifiée, ledit plastifiant étant en particulier présent en une proportion de 1,5% à 15% en poids par rapport au poids total de la composition de ladite couche, l'épaisseur de ladite couche (2') représente de préférence jusqu'à 20% de l'épaisseur totale de la structure tubulaire, en particulier jusqu'à 200µm, en particulier la couche (2') est la plus extérieure et est la seule plastifiée, la (ou les) couche(s) (2) étant dépourvue(s) de plastifiant.

La présente invention concerne l'utilisation d'une structure tubulaire multicouche MLT telle que définie ci-dessus, pour satisfaire un test d'extractibles, ledit test consistant notamment à remplir ladite structure tubulaire multicouche MLT d'essence alcoolisée type FAM-B et à chauffer l'ensemble à 60°C pendant 96 heures, puis à le vider en le filtrant dans un bêcher, puis à laisser le filtrat du bécher s'évaporer à température ambiante pour enfin peser ce résidu dont la proportion doit être inférieure ou égale à environ 6g/m2 de surface interne de tube.

Toutes les variantes décrites pour la structure tubulaire multicouche MLT s'appliquent ici pour l'utilisation de ladite structure tubulaire multicouche MLT pour satisfaire ledit test d'extractibles.

Une valeur d'extractible inférieure ou égale à environ 6g/m2 de surface interne de tube indique que la proportion d'extractibles est très faible et évitera ainsi de boucher les injecteurs.

### EXEMPLES

L'invention va maintenant être décrite plus en détail à l'aide des exemples suivants qui ne sont pas limitatifs.

Les structures suivantes ont été préparées par extrusion :
Les tubes multicouches sont réalisés par coextrusion. On utilise une ligne industrielle d'extrusion multicouche McNeil, équipée de 5 extrudeuses, connectées à une tête d'extrusion multicouche à mandrins spiralés.

Les vis utilisées sont des monovis d'extrusion ayant des profils de vis adaptés aux polyamides. En plus, des 5 extrudeuses et de la tête d'extrusion multicouche, la ligne d'extrusion comporte :
- un ensemble filière-poinçon, situé en bout de tête de coextrusion ; le diamètre intérieur de la filière et le diamètre extérieur du poinçon sont choisis en fonction de la structure à réaliser et des matériaux qui la composent, ainsi que des dimensions du tube et de la vitesse de ligne ;
- un bac à vide avec un niveau de dépression réglable. Dans ce bac circule de l'eau maintenue à 20°C en général, dans laquelle est plongé un calibre permettant de conformer le tube dans ses dimensions finales. Le diamètre du calibre est adapté aux dimensions du tube à réaliser, typiquement de 8,5 à 10 mm pour un tube de diamètre externe de 8 mm et d'épaisseur de 1 mm ;
- une succession de bacs de refroidissement dans lesquels de l'eau est maintenue vers 20°C, permettant de refroidir le tube le long de parcours de la tête au banc de tirage ;
- un mesureur de diamètre ;
- un banc de tirage.

La configuration à 5 extrudeuses est utilisée pour réaliser les tubes allant de 2 couches à 5 couches. Dans le cas des structures dont le nombre de couches est inférieur à 5, plusieurs extrudeuses sont alors alimentées avec la même matière. Avant les essais, afin d'assurer les meilleures propriétés au tube et une bonne qualité d'extrusion, on vérifie que les matières extrudées aient un taux d'humidité résiduel avant extrusion inférieur à 0.08%. Dans le cas contraire, on procède à une étape supplémentaire de séchage de la matière avant les essais, généralement dans un sécheur sous vide, pendant 1 nuit à 80°C.

Les tubes, qui répondent aux caractéristiques décrites dans la présente demande de brevet, ont été prélevés, après stabilisation des paramètres d'extrusion, les dimensions du tube visées n'évoluant plus dans le temps. Le diamètre est contrôlé par un mesureur de diamètre laser installé en bout de ligne. Généralement, la vitesse de ligne est typiquement de 20m/min. Elle varie généralement entre 5 et 100m/min.

La vitesse de vis des extrudeuses dépend de l'épaisseur de la couche et du diamètre de la vis comme cela est connu de l'homme de l'art.

De manière générale, les température des extrudeuses et des outillages (tête et raccord) doivent être réglées de sorte à être suffisamment supérieures à la température de fusion des compositions considérées, de façon à ce qu'elles demeurent à l'état fondu, évitant ainsi qu'elles se solidifient et bloquent la machine.

Les structures tubulaires ont été testées sur différents paramètres (Tableau I). La quantité d'extractibles a été déterminée, les propriétés barrières ont été évaluées ainsi que le choc et l'éclatement. Le tableau II indique les tests utilisés et la classification des résultats.

**TABLEAU I**

| Exemples et contre exemples | Extractibles | Choc |
|---|---|---|
| Contre exemple 1: PA12-TL / PPA10T 750/250µm | >2,1 | Bien |
| Contre exemple 2: PA12-TL / EFEPc 750/250µm | >2,1 | Bien |
| Ex.1 : PA12-NoPlast / PPA10T 750/250 µ m | **<2** | Bien |
| Ex.2: PA12-NoPlast / EFEPc 750/250 µ m | **<2** | Bien |

| | | |
|---|---|---|
| (1) Eclatement est l'éclatement après au moins 96h avec de la bio-essence FAM-B à l'intérieur, on cherche donc une valeur suffisamment haute pour tenir la pression | | |

L'exemple 1 est conforme à l'invention, alors que l'exemple 2 ne l'est pas.

### Compositions

PA12-TL : désigne une composition à base de polyamide 12 de Mn (masse moléculaire en nombre) 35000, contenant 6% de plastifiant BBSA (benzyl butyl sulfonamide), et 6% d'EPR fonctionnalisé anhydride Exxelor VA1801 (société Exxon), et de 1.2% de stabilisants organiques constitués de 0.8% de phénol (Lowinox 44B25 de la société Great Lakes), de 0.2% de phosphite (Irgafos 168 de la société Ciba, de 0.2% d'anti-UV (Tinuvin 312 de la société Ciba). La température de fusion de cette composition est de 175°C.
PA12-NoPlast = PA12-TL sans le plastifiant (ce dernier est remplacé par le même % en PA12)
PA12 : Polyamide 12 de Mn (masse moléculaire en nombre) 35000.
EPR1 : Désigne un EPR fonctionnalisé par un groupe réactif fonction anhydride (à 0.5-1% en masse), de MFI 9 (à 230°C, sous) 10kg, de type Exxelor VA1801 de la société Exxon.
Stabilisant organique = 1.2% de stabilisants organiques constitués de 0.8% de phénol (Lowinox 44B25 de la société Great Lakes), de 0.2% de phosphite (Irgafos 168 de la société Ciba, de 0.2% d'anti-UV (Tinuvin 312 de la société Ciba).
Plastifiant = BBSA (benzyl butyl sulfonamide).
PPA10T = coPA10.T/6.T de ratio molaire 60/40 T fusion 280°C + 18% EPR1 + stab orga
PPA10T/6T = coPA10.T/6.T avec 40% mol de 6.T (de MFI 300°C, 5kg = 8, et de T°C de fusion 280°C) + 15% d'EPR1 + stab orga
EFEPc = EFEP fonctionnalisé et conducteur type Neoflon RP5000AS de Daikin

Les structures présentant des couches dépourvues de plastifiant situées au-dessus de la barrière en contact avec le fluide présentent d'excellents résultats sur le test d'extractibles et bien meilleurs que les contre exemples dans lesquels la couche extérieure est plastifiée ou ceux dans lesquels une double barrière est présente.

## Revendications

1. Utilisation d'une structure tubulaire multicouche MLT destinée au transport de carburants, en particulier d'essence, comprenant de l'intérieur vers l'extérieur au moins une couche intérieure barrière (1) en PPA et au moins une couche extérieure (2) situé au-dessus de la couche barrière,
ladite couche extérieure (2) ou l'ensemble des couches (2) et des autres couches éventuelles situées au-dessus de la couche barrière, contenant en moyenne de 0 à 5% de plastifiant par rapport au poids total de la composition de la couche (2), ou dans laquelle l'ensemble des couches extérieures, situées au-dessus de la couche barrière, comprennent en moyenne de 0 à 5% de plastifiant,
ladite couche extérieure (2) comprenant majoritairement au moins un polyamide de type aliphatique ou constitué de plus de 75% de motifs aliphatiques, ledit polyamide aliphatique étant choisi parmi :
- un polyamide noté A présentant un nombre moyen d'atomes de carbone par atome d'azote noté C_{A} compris entre 4 et 8,5, avantageusement entre 4 et 7 ;
- un polyamide noté B et un nombre moyen d'atomes de carbone par atome d'azote noté C_{B} compris entre 7 et 10, avantageusement entre 7,5 et 9,5 ;
- un polyamide noté C présentant un nombre moyen d'atomes de carbone par atome d'azote noté C_{C} compris entre 9 et 18, avantageusement entre 10 et 18 ;
sous réserve que lorsque ladite couche extérieure (2) comprend au moins trois polyamides, l'un au moins desdits polyamides A, B ou C est exclu,
pour satisfaire un test d'extractibles, ledit test consistant à remplir ladite structure tubulaire multicouche MLT d'essence alcoolisée type FAM-B et à chauffer l'ensemble à 60°C pendant 96 heures, puis à le vider en le filtrant dans un bêcher, puis à laisser le filtrat du bécher s'évaporer à température ambiante pour enfin peser ce résidu dont la proportion doit être inférieure ou égale à environ 6g/m2 de surface interne de tube.

2. Utilisation d'une structure tubulaire multicouche (MLT) selon la revendication 1, dans laquelle ladite couche extérieure (2) comprend de 0 à 1,5% de plastifiant par rapport au poids total de la composition de la couche (2).

3. Utilisation d'une structure tubulaire multicouche (MLT) selon la revendication 1 ou 2, dans laquelle au moins une deuxième couche extérieure (2') située au-dessus de la couche barrière est présente, et de préférence située au-dessus de la couche (2), ladite couche (2') étant plastifiée, ledit plastifiant étant en particulier présent en une proportion de 1,5% à 15% en poids par rapport au poids total de la composition de ladite couche, l'épaisseur de ladite couche (2') représente de préférence jusqu'à 20% de l'épaisseur totale de la structure tubulaire, en particulier jusqu'à 200µm.

4. Utilisation d'une structure tubulaire multicouche (MLT) selon la revendication 3, dans laquelle la couche (2') est la plus extérieure et est la seule plastifiée, la (ou les) couche(s) (2) étant dépourvue(s) de plastifiant.

5. Utilisation d'une structure tubulaire multicouche (MLT) selon l'une des revendications 1 à 4, dans laquelle au moins une couche (3) est présente, ladite couche (3) ne contenant pas plus de 15% en poids de plastifiant, de préférence pas plus de 1,5% en poids de plastifiant, par rapport au poids total des constituants de la couche (3), avantageusement la couche (3) est dépourvue de plastifiant,
ladite couche (3) comprenant majoritairement au moins un polyamide de type aliphatique ou constitué de plus de 75% de motifs aliphatiques, ledit polyamide aliphatique étant choisi parmi :
- un polyamide noté A présentant un nombre moyen d'atomes de carbone par atome d'azote noté C_{A} compris de 4 à 8,5, avantageusement de 4 à 7 ;
- un polyamide noté B et un nombre moyen d'atomes de carbone par atome d'azote noté C_{B} compris de 7 à 10, avantageusement de 7,5 à 9,5 ;
- un polyamide noté C présentant un nombre moyen d'atomes de carbone par atome d'azote noté C_{C} compris de 9 à 18, avantageusement de 10 à 18 ;
sous réserve que lorsque ladite couche (3) comprend au moins trois polyamides, l'un au moins desdits polyamides A, B ou C est exclu,
ladite couche (3) étant située entre la couche extérieure (2) et la couche barrière (1) ;
ou ladite couche (3) est une couche de liant dont l'épaisseur représente jusqu'à 15% de la structure (MLT).

6. Utilisation d'une structure tubulaire multicouche (MLT) selon l'une des revendications 1 à 5, le polyamide de la couche extérieure (2) est un polyamide totalement aliphatique.

7. Utilisation d'une structure tubulaire multicouche (MLT) selon l'une des revendications 1 à 6, dans laquelle le polyamide de la couche extérieure (2) est un polyamide choisi parmi B ou C tels que définis dans la revendication 1, en particulier PA 11, PA12, PA610, PA612, PA1012, les copolyamides correspondants et les mélanges desdits polyamides ou copolyamides, les polyamides obtenus à partir d'un lactame étant avantageusement lavés.

8. Utilisation d'une structure tubulaire multicouche (MLT) selon l'une des revendications 1 à 7, dans laquelle le PPA de la couche barrière (1) est conducteur.

9. Utilisation d'une structure tubulaire multicouche (MLT) selon l'une des revendications 5 à 8, dans laquelle le polyamide de la couche (3) est choisi parmi les mélanges binaires : PA6 et PA12, PA6 et PA612, PA6 et PA610, PA12 et PA612, PA12 et PA610, PA1010 et PA612, PA1010 et PA610, PA1012 et PA612, PA1012 et PA610, et les mélanges ternaires : PA6, PA610 et PA12 ; PA6, PA612 et PA12 ; PA6, PA614 et PA12.

10. Utilisation d'une structure tubulaire multicouche (MLT) selon l'une des revendications 5 à 9, dans laquelle au moins une des couches (2) ou (3) comprend au moins un modifiant choc et/ou au moins un additif.

11. Utilisation d'une structure tubulaire multicouche (MLT) selon l'une des revendications 1 à 10, dans laquelle la structure comprend deux couches dans l'ordre suivant (2)//(1), la couche (2) ne contenant pas plus de 1,5% en poids de plastifiant, par rapport au poids total de la composition de chaque couche, en particulier la couche (2) est dépourvue de plastifiant.

12. Utilisation d'une structure tubulaire multicouche (MLT) selon l'une des revendications 3 à 11, dans laquelle la structure comprend trois couches dans l'ordre suivant (2')//(2)//(1), la couche (2') étant telle que définie dans la revendication 2, la couche (2) ne contenant pas plus de 1,5% en poids de plastifiant, par rapport au poids total de la composition de chaque couche, en particulier la couche (2) est dépourvue de plastifiant.

13. Utilisation d'une structure tubulaire multicouche (MLT) selon l'une des revendications 5 à 12, dans laquelle la structure comprend trois couches dans l'ordre suivant :
(2)//(3)//(1), la couche (3) comprenant du plastifiant, ou la couche (3) lorsqu'elle est différente de la couche de liant est dépourvue de plastifiant.

14. Utilisation d'une structure tubulaire multicouche (MLT) selon l'une des revendications 5 à 13, dans laquelle la structure comprend les couches dans l'ordre suivant :
(2')//(2)//(3)//(1), la couche (3) comprenant du plastifiant, ou la couche (3) est dépourvue de plastifiant.

## Patentansprüche

1. Verwendung einer rohrförmigen Mehrschichtstruktur MLT, bestimmt zum Transport von Kraftstoffen, insbesondere von Benzin, die von innen nach außen mindestens eine innere Sperrschicht (1) aus PPA und mindestens eine Außenschicht (2) umfasst, die über der Sperrschicht angeordnet ist,
wobei die Außenschicht (2) oder die Gesamtheit der Schichten (2) und der anderen möglichen Schichten, die über der Sperrschicht angeordnet sind, bezogen auf das Gesamtgewicht der Zusammensetzung der Schicht (2) durchschnittlich zu 0 bis 5 % Weichmacher enthalten, oder wobei die Gesamtheit der Außenschichten, die über der Sperrschicht angeordnet sind, durchschnittlich zu 0 bis 5 % Weichmacher enthalten,
wobei die Außenschicht (2) überwiegend mindestens ein Polyamid vom aliphatischen Typ umfasst oder zu mehr als 75 % aus aliphatischen Einheiten aufgebaut ist, wobei das aliphatische Polyamid ausgewählt ist aus:
- einem Polyamid mit der Bezeichnung A, das eine durchschnittliche Anzahl von Kohlenstoffatomen pro Stickstoffatom mit der Bezeichnung C_{A} im Bereich zwischen 4 und 8,5, vorteilhafterweise zwischen 4 und 7 aufweist;
- einem Polyamid mit der Bezeichnung B und einer durchschnittlichen Anzahl von Kohlenstoffatomen pro Stickstoffatom mit der Bezeichnung C_{B} im Bereich zwischen 7 und 10, vorteilhafterweise zwischen 7,5 und 9,5;
- einem Polyamid mit der Bezeichnung C, das eine durchschnittliche Anzahl von Kohlenstoffatomen pro Stickstoffatom mit der Bezeichnung Cc im Bereich zwischen 9 und 18, vorteilhafterweise zwischen 10 und 18 aufweist;
unter der Voraussetzung, dass, wenn die Außenschicht (2) mindestens drei Polyamide umfasst, mindestens eines der Polyamide A, B oder C ausgeschlossen ist,
um einer Extraktionsprüfung zu genügen, wobei die Prüfung darin besteht, die mehrschichtige rohrförmige Struktur MLT mit alkoholhaltigem Benzin vom Typ FAM-B zu füllen und die Gesamtheit während 96 Stunden auf 60°°C zu erwärmen, anschließend durch Filtern in ein Becherglas zu entleeren, das Filtrat anschließend bei Umgebungstemperatur aus dem Becherglas verdampfen zu lassen, um diesen Rest schließlich zu wiegen, dessen Anteil kleiner als oder gleich etwa 6 g/m2 der Innenoberfläche des Rohrs sein muss.

2. Verwendung einer rohrförmigen Mehrschichtstruktur (MLT) nach Anspruch 1, wobei die Außenschicht (2) bezogen auf das Gesamtgewicht der Zusammensetzung der Schicht (2) zu 0 bis 1,5 % Weichmacher enthält.

3. Verwendung einer rohrförmigen Mehrschichtstruktur (MLT) nach Anspruch 1 oder 2, wobei mindestens eine zweite Außenschicht (2'), die über der Sperrschicht angeordnet ist und vorzugsweise über der Schicht (2) angeordnet ist, vorhanden ist, wobei die Schicht (2') weichgemacht wurde, wobei der Weichmacher bezogen auf das Gesamtgewicht der Zusammensetzung der Schicht insbesondere in einem Anteil von 1,5 Gew.-% bis 15 Gew.-% vorhanden ist, wobei die Dicke der Schicht (2') vorzugsweise bis zu 20 % der Gesamtdicke der rohrförmigen Struktur ausmacht, insbesondere bis zu 200 µm.

4. Verwendung einer rohrförmigen Mehrschichtstruktur (MLT) nach Anspruch 3, wobei die Schicht (2') die äußerste ist und die einzige weichgemachte ist, wobei die Schicht oder die Schichten (2) frei von Weichmacher ist/sind.

5. Verwendung einer rohrförmigen Mehrschichtstruktur (MLT) nach einem der Ansprüche 1 bis 4, wobei mindestens eine Schicht (3) vorhanden ist, wobei die Schicht (3) bezogen auf das Gesamtgewicht der Bestandteile der Schicht (3) nicht mehr als 15 Gew.-% Weichmacher, vorzugsweise nicht mehr als 1,5 Gew.-% Weichmacher, enthält, wobei die Schicht (3) vorteilhafterweise frei von Weichmacher ist,
wobei die Schicht (3) überwiegend mindestens ein Polyamid vom aliphatischen Typ umfasst oder zu mehr als 75 % aus aliphatischen Einheiten besteht, wobei das aliphatische Polyamid ausgewählt ist aus:
- einem Polyamid mit der Bezeichnung A, das eine durchschnittliche Anzahl von Kohlenstoffatomen pro Stickstoffatom mit der Bezeichnung C_{A} im Bereich von 4 bis 8,5, vorteilhafterweise von 4 bis 7 aufweist;
- einem Polyamid mit der Bezeichnung B und einer durchschnittlichen Anzahl von Kohlenstoffatomen pro Stickstoffatom mit der Bezeichnung C_{B} im Bereich von 7 bis 10, vorteilhafterweise von 7,5 bis 9,5;
- einem Polyamid mit der Bezeichnung C, das eine durchschnittliche Anzahl von Kohlenstoffatomen pro Stickstoffatom mit der Bezeichnung C_{C} im Bereich von 9 bis 18, vorteilhafterweise von 10 bis 18 aufweist;
unter der Voraussetzung, dass, wenn die Schicht (3) mindestens drei Polyamide umfasst, mindestens eines der Polyamide A, B oder C ausgeschlossen ist,
wobei die Schicht (3) zwischen der Außenschicht (2) und der Sperrschicht (1) angeordnet ist;
oder wobei die Schicht (3) eine Bindemittelschicht ist, deren Dicke bis zu 15 % der Struktur (MLT) ausmacht.

6. Verwendung einer rohrförmigen Mehrschichtstruktur (MLT) nach einem der Ansprüche 1 bis 5, wobei das Polyamid der Außenschicht (2) ein vollständig aliphatisches Polyamid ist.

7. Verwendung einer rohrförmigen Mehrschichtstruktur (MLT) nach einem der Ansprüche 1 bis 6, wobei das Polyamid der Außenschicht (2) ein Polyamid ist, ausgewählt aus B oder C, wie in Anspruch 1 definiert, insbesondere PA 11, PA12, PA610, PA612, PA1012, den entsprechenden Copolyamiden und den Mischungen der Polyamide oder Copolyamide, wobei die aus einem Lactam erhaltenen Polyamide vorteilhafterweise gewaschen sind.

8. Verwendung einer rohrförmigen Mehrschichtstruktur (MLT) nach einem der Ansprüche 1 bis 7, wobei das PPA der Sperrschicht (1) leitfähig ist.

9. Verwendung einer rohrförmigen Mehrschichtstruktur (MLT) nach einem der Ansprüche 5 bis 8, wobei das Polyamid der Schicht (3) ausgewählt ist aus den binären Mischungen: PA6 und PA12, PA6 und PA612, PA6 und PA610, PA12 und PA612, PA12 und PA610, PA1010 und PA612, PA1010 und PA610, PA1012 und PA612, PA1012 und PA610 und den ternären Mischungen: PA6, PA610 und PA12; PA6, PA612 und PA12; PA6, PA614 und PA12.

10. Verwendung einer rohrförmigen Mehrschichtstruktur (MLT) nach einem der Ansprüche 5 bis 9, wobei mindestens eine der Schichten (2) oder (3) mindestens einen Schlagzähmodifizierer und/oder mindestens ein Additiv enthält.

11. Verwendung einer rohrförmigen Mehrschichtstruktur (MLT) nach einem der Ansprüche 1 bis 10, wobei die Struktur zwei Schichten in folgender Reihenfolge (2)//(1) umfasst, wobei die Schicht (2) bezogen auf das Gesamtgewicht der Zusammensetzung jeder Schicht nicht mehr als 1,5 Gew.-% Weichmacher enthält, wobei insbesondere die Schicht (2) frei von Weichmacher ist.

12. Verwendung einer rohrförmigen Mehrschichtstruktur (MLT) nach einem der Ansprüche 3 bis 11, wobei die Struktur drei Schichten in folgender Reihenfolge (2')//(2)//(1) umfasst, wobei die Schicht (2') wie in Anspruch 2 definiert ist, die Schicht (2) bezogen auf das Gesamtgewicht der Zusammensetzung jeder Schicht nicht mehr als 1,5 Gew.-% Weichmacher enthält, wobei insbesondere die Schicht (2) frei von Weichmacher ist.

13. Verwendung einer rohrförmigen Mehrschichtstruktur (MLT) nach einem der Ansprüche 5 bis 12, wobei die Struktur drei Schichten in folgender Reihenfolge umfasst:
(2)//(3)//(1), wobei die Schicht (3) Weichmacher umfasst oder die Schicht (3), wenn sie von der Bindemittelschicht verschieden ist, frei von Weichmacher ist.

14. Verwendung einer rohrförmigen Mehrschichtstruktur (MLT) nach einem der Ansprüche 5 bis 13, wobei die Struktur die Schichten in folgender Reihenfolge umfasst:
(2')//(2)//(3)//(1), wobei die Schicht (3) Weichmacher umfasst oder die Schicht (3) frei von Weichmacher ist.

## Claims

1. Use of a multilayer tubular structure (MLT) for transporting fuels, in particular gasoline, comprising, from the inside to the outside, at least one inside barrier layer (1) in PPA and at least one outer layer (2) located above the barrier layer,
said outer layer (2) or all of the layers (2) and any other layers located above the barrier layer, containing on average from 0 to 5% by weight of plasticizer relative to the total weight of the composition of the layer (2), or wherein all the outer layers, located above the barrier layer, comprise on average from 0 to 5% of plasticizer.
said outer layer (2) predominantly comprising at least one aliphatic polyamide or a polyamide consisting of more than 75% of aliphatic units, said aliphatic polyamide being selected from:
- a polyamide denoted A having an average number of carbon atoms per nitrogen atom denoted C_{A} comprised between 4 and 8.5, advantageously between 4 and 7;
- a polyamide denoted B and an average number of carbon atoms per nitrogen atom denoted C_{B} comprised between 7 and 10, advantageously between 7.5 and 9.5,
- a polyamide denoted C having an average number of carbon atoms per nitrogen atom denoted Cc comprised between 9 and 18, advantageously between 10 and 18;
with the proviso that, when said outer layer (2) comprises at least three polyamides, at least one of said polyamides A, B or C is excluded,
in order to satisfy an extractables test, said test consisting of filling said multilayer tubular structure MLT with FAM-B alcohol-based gasoline, and heating the assembly at 60°C for 96 hours, then emptying it by filtering it into a beaker, then allowing the filtrate from the beaker to evaporate at room temperature and finally weighing this residue, the proportion of which must be less than or equal to approximately 6 g/m² of internal tube surface.

2. Use of a multilayer tubular structure (MLT) according to claim 1, wherein said outer layer (2) comprises from 0 to 1.5% of plasticizer relative to the total weight of the composition of the layer (2).

3. Use of a multilayer tubular structure (MLT) according to claim 1 or 2, wherein at least one second outer layer (2') located above the barrier layer is present, and preferably located above the layer (2), said layer (2') being plasticized, said plasticizer being in particular present in a proportion of 1.5% to 15% by weight relative to the total weight of the composition of said layer, the thickness of said layer (2') preferably represents up to 20% of the total thickness of the tubular structure, in particular up to 200 µm.

4. Use of a multilayer tubular (MLT) structure according to claim 3, wherein the layer (2') is the outermost layer and is the only plasticized layer, the layer(s) (2) being free of plasticizer.

5. Use of a multilayer tubular structure (MLT) according to one of claims 1 to 4, wherein at least one layer (3) is present, said layer (3) containing not more than 15% by weight of plasticizer, preferably not more than 1.5% by weight of plasticizer, relative to the total weight of the components of layer (3), advantageously layer (3) is free of plasticizer,
said layer (3) predominantly comprising at least one aliphatic polyamide or a polyamide consisting of more than 75% of aliphatic units, said aliphatic polyamide being selected from:
- a polyamide denoted A having an average number of carbon atoms per nitrogen atom denoted C_{A} comprised from 4 to 8.5, advantageously from 4 to 7;
- a polyamide denoted B and an average number of carbon atoms per nitrogen atom denoted C_{B} comprised from 7 to 10, advantageously from 7.5 to 9.5,
- one polyamide denoted C having an average number of carbon atoms per nitrogen atom denoted Cc comprised from 9 to 18, advantageously from 10 to 18;
with the proviso that, when said layer (3) comprises at least three polyamides, at least one of said polyamides A, B or C is excluded,
said layer (3) being located between the outer layer (2) and the barrier layer (1);
or said layer (3) is a binder layer, the thickness of which is up to 15% of the structure (MLT).

6. Use of a multilayer tubular structure (MLT) according to one of claims 1 to 5, the polyamide of the outer layer (2) is a completely aliphatic polyamide.

7. Use of a multilayer tubular structure (MLT) according to one of claims 1 to 6, wherein the polyamide of the outer layer (2) is a polyamide selected from B or C as defined in claim 1, in particular PA 11, PA12, PA610, PA612, PA1012, the corresponding copolyamides and the mixtures of said polyamides or copolyamides, the polyamides obtained from a lactam being advantageously washed.

8. Use of a multilayer tubular structure (MLT) according to one of claims 1 to 7, wherein the PPA of the outer layer (1) is conductive.

9. Use of a multilayer tubular structure (MLT) according to one of claims 5 to 8, wherein the polyamide of the layer (3) is selected from the binary mixtures: PA6 and PA12, PA6 and PA612, PA6 and PA610, PA12 and PA612, PA12 and PA610, PA1010 and PA612, PA1010 and PA610, PA1012 and PA612, PA1012 and PA610, and the ternary mixtures: PA6, PA610 and PA12; PA6, PA612 and PA12; PA6, PA614 and PA12.

10. Use of a multilayer tubular structure (MLT) according to one of claims 5 to 9, wherein at least one of the layers (2) or (3) comprises at least one impact modifier and/or at least one additive.

11. Use of a multilayer tubular structure (MLT) according to one of claims 1 to 10, wherein the structure comprises two layers in the following order (2)//(1), the layer (2) containing not more than 1.5% by weight of plasticizer relative to the total weight of the composition of each layer, in particular the layer (2) is free of plasticizer.

12. Use of a multilayer tubular structure (MLT) according to one of claims 3 to 11, wherein the structure comprises three layers in the following order (2')//(2)//(1), the layer (2') being as defined in claim 2, the layer (2) containing not more than 1.5% by weight of plasticizer relative to the total weight of the composition of each layer, in particular the layer (2) is free of plasticizer.

13. Use of a multilayer tubular structure (MLT) according to one of claims 5 to 12, wherein the structure comprises three layers in the following order:
(2)//(3)//(1), the layer (3) containing plasticizer, or the layer (3) when it is different from the binder layer is free of plasticizer.

14. Use of a multilayer tubular structure (MLT) according to one of claims 5 to 13, wherein the structure comprises the layers in the following order:
(2')//(2)//(3)//(1), the layer (3) comprising plasticizer, or the layer (3) is free of plasticizer.
